(19) Europäisches Patentamt
European Patent Office
Office européen des brevets

(11) Numéro de publication: **0 236 201 B1**

(12) # FASCICULE DE BREVET EUROPEEN

(45) Date de publication du fascicule du brevet: **18.10.89**

(51) Int. Cl.⁴: **C08G 18/50**, C08G 18/78, C09D 3/72

(21) Numéro de dépôt: **87400331.2**

(22) Date de dépôt: **16.02.87**

(54) **Couche de revêtement transparente en polyuréthane élastique souple pour substrats transparents en verre ou en résine synthétique.**

(30) Priorité: **22.02.86 DE 3605765**

(43) Date de publication de la demande: **09.09.87 Bulletin 87/37**

(45) Mention de la délivrance du brevet: **18.10.89 Bulletin 89/42**

(84) Etats contractants désignés: **AT BE CH DE ES FR GB IT LI LU NL SE**

(56) Documents cités:
**DE-B- 2 452 928**
**DE-C- 3 407 563**
**FR-A- 2 098 344**
**FR-A- 2 263 235**

(73) Titulaire: **SAINT-GOBAIN VITRAGE, "Les Miroirs" 18, avenue d'Alsace, F-92400 Courbevoie(FR)**
(84) Etats contractants désignés: **BE CH ES FR GB IT LI LU NL SE AT**

(73) Titulaire: **VEGLA Vereinigte Glaswerke GmbH, Viktoriaallee 3-5, D-5100 Aachen(DE)**
(84) Etats contractants désignés: **DE**

(72) Inventeur: **Fock, Jürgen, Dr., Moersenbroicher Weg 114, D-4000 Düsseldorf 30(DE)**
Inventeur: **Hahn, Günter, Dr., Eigene Scholle 35, D-4330 Mülheim/Ruhr(DE)**
Inventeur: **Holzer, Gerhard, Dr., Dr.Josef-Lamby-Strasse 2, D-5100 Aachen(DE)**
Inventeur: **Rädisch, Helmer, Dr., Nizzaallee 36, D-5100 Aachen(DE)**

(74) Mandataire: **Muller, René et al, SAINT-GOBAIN RECHERCHE 39, quai Lucien Lefranc, F-93304 Aubervilliers(FR)**

**EP 0 236 201 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne une couche de revêtement transparente pour des vitrages ou autres substrats transparents en verre ou en résine synthétique, consistant en polyuréthanne élastique souple qui est préparé à partir d'un mélange de réaction dont le composant isocyanate consiste en polyisocyanates essentiellement trifonctionnels aliphatiques à structure de biuret ou d'isocyanurate, formés à base de 1,6-hexaméthylènediisocyanate, ayant une teneur en radicaux NCO de 15 à 25% en poids et un poids moléculaire moyen d'environ 450 à environ 1000 g par mole, dont le composant polyol contient au moins un polyol plurifonctionnel, et qui contient éventuellement un catalyseur de réaction et d'autres substances auxiliaires.

Lorsque des couches de revêtement de ce genre sont appliquées sur des vitrages en verre de silicate, elles servent de couches antiéclats qui empêchent, lors de la rupture de vitrage, le contact avec les bords aigus des fragments de verre. Les vitrages en verre portant de telles couches de revêtement conviennent particulièrement comme vitrages de sécurité pour les véhicules automobiles et sont connues, par exemple, d'après la demande publiée de brevet allemand AS 2.228.299 et le brevet allemand 2.452.928.

Des couches du genre indiqué sont connues également comme couches de revêtement pour des substrats en matière plastique transparents (demandes publiées de brevet allemand OS 2.058.504, 2.634.816, 3.201.849). Dans ce cas, ces couches de polyuréthanne servent à améliorer la résistance à la rayure du substrat.
Les couches de polyuréthanne élastique souple ont en effet la propriété que sous les sollicitations des genres habituels, qui conduisent avec les résines synthétiques plus dures à des déformations superficielles et à des rayures, elles subissent uniquement une déformation élastique qui disparaît après peu de temps. Cette propriété est également dite "propriété d'autocicatrisation".

Ces couches de revêtement connues en polyuréthanne transparent peuvent être appliquées suivant différents procédés sur le substrat. Ainsi, il est connu de fabriquer d'abord des feuilles de cette matière et de stratifier ces feuilles sur le substrat avec interposition d'une couche d'adhésif (demande publiée de brevet allemand AS 2.629.779). Il est de plus connu de couler ou pulvériser sur le substrat à revêtir, le mélange de réaction réagissant en le polyuréthanne, auquel cas des couches d'un intermédiaire d'adhérence peuvent éventuellement être appliquées au préalable sur le substrat.

Les couches de revêtement connues du genre indiqué ont de remarquables propriétés pour ce qui est de leur résistance à la sollicitation par abrasion et rayure, de leur transparence et de leurs autres propriétés d'usage. Elles ont toutefois la propriété que, par condensation de l'humidité atmosphérique à leur surface, il se forme un dépôt de très fines gouttelettes d'eau qui peut nuire à la vue à travers le vitrage ou la feuille.

L'invention a pour but de modifier des couches de revêtement en polyuréthanne élastique souple ayant des propriétés d'autocicatrisation du genre indiqué ci-dessus de façon que la formation d'un dépôt d'humidité gênant à leur surface soit diminuée ou empêchée durablement tout en conservant leurs bonnes propriétés mécaniques, optiques et autres.

Conformément à l'invention, ce but est atteint par le fait que le composant polyol du mélange de réaction utilisé consiste en un polyétherpolyol sulfoné difonctionnel ayant une teneur en radicaux OH d'environ 1 à 10% en poids et en un polyol trifonctionnel ayant une teneur en radicaux OH d'environ 8 à 12% en poids et un poids moléculaire moyen d'environ 400 à environ 1000 g par mole.

Conformément à l'invention, grâce à une modification judicieuse de la composition du composant polyol du mélange de réaction, la couche de revêtement en polyuréthanne qui en résulte est modifiée au point d'acquérir des propriétés hydrophiles. Au contraire des recettes connues pour la préparation de mélanges de réaction pour la couche de revêtement élastique souple, on incorpore conformément à l'invention, dans la couche de revêtement et dès lors aussi dans sa surface extérieure, des polyétherpolyols sulfonés difonctionnels qui agissent comme agents mouillants sur les gouttelettes d'eau en cours de condensation et abaissent la tension interfaciale entre la couche de couverture et les gouttelettes d'eau. La couche de revêtement acquiert de cette façon des propriétés hydrophiles et est à même d'étaler l'eau dans la mesure nécessaire. D'autre part, les propriétés physico-mécaniques de la couche de revêtement ne sont pas modifiées inadmissiblement par l'addition des polyétherpolyols sulfonés difonctionnels, mais se maintiennent intactes dans la mesure nécessaire.

Suivant un développement avantageux de l'invention, on utilise comme polyétherpolyol sulfoné difonctionnel, en particulier un éther polyoxyalcoylénique de 1,2- ou 1,3-diols de formule

$$R^1CH_2O-(C_2H_4O-)_n(C_3H_6O-)_mCH_2CHR^3CH_2-SO_2X$$

où

$R^1$ = 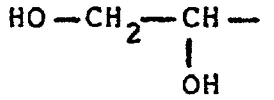 , 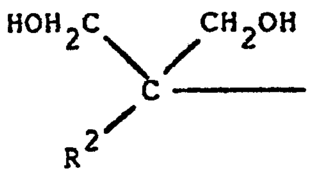 ,

$R^2$ = $CH_3-$, $C_2H_5-$, $C_3H_7-$,

$R^3$ = $H-$ ou $CH_3-$,

X = H-, ion alcalin ou ammonium,

n = 0 à 100,

m = 0 à 30,

$n + m \geqslant 1$

pour le composant polyol, ayant de préférence un poids moléculaire moyen d'environ 500 à 5000 g par mole, par exemple d'environ 2000 g par mole.

Les polyétherpolyols sulfonés qui sont utilisés conformément à l'invention sont connus comme tels d'après le brevet allemand 3.407.563. Il est connu aussi que ces composés se prêtent à la préparation ou à la modification des polyuréthannes et que les propriétés des produits de polyaddition polymères, en particulier les propriétés de surface, sont ainsi influencées. Par exemple, on a établi que par addition des composés indiqués, les propriétés d'adhésivité des polyuréthannes adhésifs durcissables sont améliorées. L'effet favorable observé des composés sur la tension superficielle de l'eau et ainsi sur le dépôt d'humidité nuisant éventuellement à la bonne visibilité n'était toutefois pas directement prévisible.

Une autre amélioration dans le sens de l'optimalisation pour ce qui est des propriétés hydrophiles ainsi que physico-mécaniques de la couche de revêtement peut être obtenue en utilisant un éther polyoxyalcoylénique sulfoné qui est formé de radicaux éthoxy et propoxy comprenant au moins 50% en poids de radicaux éthoxy dans la chaîne. On atteint des propriétés particulièrement bonnes lorsque l'éther polyoxyalcoylénique sulfoné présente un rapport éthoxy-propoxy d'environ 80:20.

Dans une forme avantageuse de l'invention, la proportion de l'éther polyoxyalcoylénique sulfoné dans le mélange de réaction est de 5 è 15% en poids.

Selon une autre caractéristique de l'invention le polyol trifonctionnel est choisi parmi un polyétherpolyol à base de triméthylolpropane ou de glycérol et d'oxyde de propylène, et un lactone polyesterpolyol à base de triméthylolpropane ou de glycérol et d'ε-caprolactone.

Selon une autre caractéristique de l'invention, on utilise un mélange de réaction présentant un rapport NCO/OH de 0,8 à 1,1 et de préférence d'environ 0,9.

Selon une autre caractéristique de l'invention , le mélange de réaction contient un ou plusieurs composés chimiques tels que des huiles de silicone ou des esters alcoyliques fluorés en une quantité de 0,05 à 0,15% en poids comme agent d-écoulement.

Selon une autre caractéristique de l'invention, le mélange de réaction contient de 0,5 à 2% en poids de sébaçate de bis (1, 2, 2, 6, 6-pentaméthyl-4-pipéridyle/ comme agent de protection contre la lumière.

Selon une autre caractéristique de l'invention, le mélange de réaction contient des agents absorbants les rayons ultraviolets tels que des benzotriazoles substitués en une quantité de 0,5 à 5% en poids.

D'autres formes de réalisation et développements avantageux de l'invention ressortent de la description de différents exemples d'exécution.

Pour l'évaluation des propriétés physico-mécaniques des couches de revêtement en polyuréthane élastique souple, on détermine comme grandeurs représentatives, le module E, la résistance à l'abrasion et la dureté à la microrayure qui, dans leur ensemble, permettent de prévoir si la couche de revêtement présentera les propriétés d'autoréparation requises et le comportement d'usage nécessaire. On détermine à cet effet le module E suivant le procédé décrit dans la norme DIN 53.457. Pour la détermination de la résistance à l'abrasion, on applique le procédé décrit dans la norme ECE R-43, suivant lequel deux cylindres abrasifs entrent en interaction sous une charge de 500 g avec l'éprouvette en rotation pendant 100 tours. Pour l'évaluation de l'abrasion résultant de cette sollicitation, on détermine ensuite suivant le procédé également décrit dans la norme ECE-R43 l'augmentation de la turbidité par comparaison avec la turbidité initiale avant la manipulation, qui est indiquée en %. On détermine la dureté à la microrayure suivant le procédé d'Erichsen, pour lequel on utilise un montage expérimental tel que décrit dans la norme

DIn 53.799, sauf que le diamant conique de rayage utilisé présente un angle conique de 50 degrés et un rayon de courbure de 15 µm au sommet du cône. Pour l'évaluation de la dureté à la rayure, on indique le poids de sollicitation le plus élevé du diamant de rayage pour lequel aucune lésion visible permanente de la surface n'est identifiable.

Par expérience, on sait que les couches de revêtement en polyuréthane transparentes autocicatrisables peuvent être utilisées comme couches antiéclats lorsque le module E de ces couches se situe entre 2 et 20 N/mm², l'augmentation de turbidité par abrasion suivant ECER-43 est inférieure à 4% environ et la dureté à la microrayure suivant Erichsen est supérieure à 10 p. De même, les couches de revêtement hydrophiles ne conviennent pour un usage durable pratique que lorsque les propriétés indiquées se situent à l'intérieur de ces limites.

Pour l'évaluation de l'aptitude au mouillage de la couche de revêtement et donc de son effet anticondensation, on mesure à l'aide d'un microscope à goniomètre l'angle limite de gouttes d'eau déposées sur la surface de la couche de revêtement. Tandis qu'avec les couches de revêtement connues en polyuréthane élastique souple, qui ne manifestent pas d'effet anticondensation, la grandeur de l'angle limite est de 70 à 80 degrés, la grandeur de l'angle limite avec les couches de revêtement modifiées conformément à l'invention est réduite jusqu'à 30 à 45 degrés.

Différents exemples d'exécution son décrits ci-après dans le cadre des compositions revendiquées et les propriétés mécaniques et anticondensation mesurées sur chacune de ces couches sont indiquées.

EXEMPLE 1

On prépare un mélange de réaction dans lequel on utilise un éther polyoxyalcoylénique sulfoné difonctionnel d'un poids moléculaire moyen d'environ 1000 g par mole et à 100% en poids de radicaux éthoxy dans la chaîne polymère et contenant de plus un radical $SO_3^-Na^+$ terminal. A cet effet, on fait réagir 50 g d'un polyisocyanate essentiellement trifonctionnel contenant des radicaux biuret à base de 1,6-hexaméthylènediisocyanate d'une teneur en radicaux NCO libres de 23% avec 50 g d'un polyol trifonctionnel à base de triméthylpropane d'une teneur en radicaux OH de 11% en poids et d'un poids moléculaire moyen de 500 g par mole, ainsi que 5 g du polyéther-1,3-diol sulfoné d'une teneur en radicaux OH de 3% en poids et d'un poids moléculaire moyen d'environ 1000 g par mole. On ajoute comme additifs au polyol,0,05 g de dilaurate de dibutylétain comme catalyseur et 0,1 g d'un ester alcoylique fluoré comme agent d'écoulement.

On agite vivement le mélange à la température ambiante pendant 10 minutes. On coule le mélange de réaction ainsi homogénéisé en une épaisseur de couche de 0,5 mm sur des plaques de verre chaudes à environ 60°C. La réaction de durcissement a lieu pendant 30 minutes à 90°C.

Après 48 heures de conservation à 20°C et 50% d'humidité relative, on détache les feuilles et on détermine leurs propriétés, les valeurs suivantes étant relevées:

| | |
|---|---|
| Module E | 7,3 ± 0,2 N/mm² |
| Augmentation de turbidité par abrasion | 4,0% |
| Dureté à la microrayure | 27 p |
| Angle limite (mesuré sur la surface de la feuille qui a été en contact avec la surface du verre) | 44 degrés |

Les propriétés mécaniques de cette couche de revêtement se situent donc à l'intérieur des limites exigées, alors que le comportement à la condensation s'améliore simultanément de façon notable.

EXEMPLE 2

On prépare un mélange de réaction tel que décrit dans l'exemple 1, mais où la quantité du polyéther1,3-diol sulfoné d'une teneur en radicaux OH de 3% en poids et d'un poids moléculaire moyen d'environ 1000 g par mole est augmentée jusqu'à 15 g.

On conserve à nouveau pendant 48 heures à 20°C et dans une humidité relative atmosphérique de 50%,les éprouvettes ainsi préparées. On détermine ensuite les propriétés des couches de revêtement, les valeurs suivantes étant relevées:

| | |
|---|---|
| Module E | 5,7 ± 0,2 N/mm² |
| Augmentation de turbidité par abrasion | 2,4% |
| Dureté à la microrayure | 22 p |
| Angle limite (mesuré sur la surface de la feuille qui a été en contact avec la surface du verre) | 40 degrés |

De la sorte, les propriétés mécaniques se situent dans ce cas aussi à l'intérieur des limites indiquées, alors que le comportement à la condensation est aussi notablement amélioré.

EXEMPLE 3

On prépare un mélange de réaction,dans lequel on utilise un éther polyoxyalcoylénique sulfoné difonctionnel d'une teneur en radicaux OH de 1,4% en poids, d'un poids moléculaire moyen d'environ 2500 g par mole et à 100% en poids de radicaux éthoxy dans la chaîne polymère, contenant un radical $SO_3^-Na^+$ terminal.

A cet effet, on fait réagir 50 g d'un polyisocyanate essentiellement trifonctionnel contenant des radicaux biuret à base de 1,6-hexaméthylènediisocyanate, d'une teneur en radicaux NCO libres de 23% en poids avec 50 g d'un polyol plurifonctionnel à base de triméthylolpropane, d'une teneur en radicaux OH de 11% en poids et d'une masse molaire moyenne de 500 g par mole, de même qu'avec 10 g du polyéther-1,3-diol sulfoné d'une teneur en radicaux OH de 1,4% en poids et d'un poids moléculaire moyen d'environ 2500 g par mole.

On ajoute comme additifs aux polyols,0,05 g de dilaurate de dibutylétain comme catalyseur et 0,1 g d'un ester alcoylique fluoré comme agent d'écoulement.

On Agite vivement le mélange à la température ambiante pendant 10 minutes. On convertit le mélange de réaction ainsi homogénéisé de la même façon que dans les exemples décrits précédemment en feuilles durcies sur lesquelles on exécute les mesures indiquées.

On obtient ainsi les grandeurs de mesure suivantes:

| | |
|---|---|
| Module E | 6,9 ± 0,4 $N/mm^2$ |
| Augmentation de turbidité par abrasion | 2,7% |
| Dureté à la microrayure | 25 p |
| Angle limite (mesuré sur la surface de la feuille qui a été en contact avec la surface du verre) | 37 degrés |

Cette couche de revêtement aussi présente donc des propriétés grâce auxquelles elle convient pour une application pratique tant du point de vue de son comportement mécanique que du point de vue de son comportement à la condensation.

EXEMPLE 4

On prépare un mélange de réaction suivant l'un des exemples 1 à 3, mais dans lequel on utilise un éther polyoxyalcoylénique sulfoné difonctionnel présentant un poids moléculaire moyen d'environ 1000 g par mole, une teneur de 15% en poids en radicaux propoxy et de 85% en poids en radicaux éthoxy et un radical $SO_3^-Na^+$ terminal. La quantité de cet éther polyoxyalcoylénique sulfoné dans le mélange est de 10 g. On convertit le mélange comme dans l'exemple 1 en une couche de revêtement durcie sur laquelle on exécute les mesures.

On obtient ainsi les grandeurs de mesure suivantes:

| | |
|---|---|
| Module E | 6,2 ± 0,5 $N/mm^2$ |
| Augmentation de turbidité par abrasion | 2,8% |
| Dureté à la microrayure | 18 p |
| Angle limite (mesuré sur la surface de la feuille qui a été en contact avec la surface du verre) | 42 degrés |

Dans ce cas également, les valeurs mécaniques se situent entre les limites indiquées précédemment et la couche de revêtement manifeste un comportement à la condensation notablement amélioré.

EXEMPLE 5

On prépare un mélange de réaction suivant l'un des exemples précédents, mais dans lequel on utilise un éther polyoxyalcoylénique sulfoné difonctionnel présentant un poids moléculaire moyen d'environ 1300 g par mole, une teneur de 100% en poids en radicaux éthoxy dans la chaîne polymère et un radical $SO_3^-NH_4^+$ terminal. La quantité de cet éther polyoxyalcoylénique sulfoné du polyéther-1,3-diol dans le mélange de réaction est de 10 g. On convertit le mélange de réaction comme décrit dans l'exemple 1 en une feuille sur laquelle on exécute les mesures.

On obtient les grandeurs de mesure suivantes:

| | |
|---|---|
| Module E | 2,2 ± 0,1 N/mm$^2$ |
| Augmentation de turbidité par abrasion | 1,5% |
| Dureté à la microrayure | 10 p |
| Angle limite (côté verre) | 38 degrés |

Les valeurs mécaniques se situent encore à l'intérieur des limites exigées et la couche de revêtement présente de bonnes propriétés anticondensation.

L'invention concerne également les vitrages monolithiques ou feuilletés en verre et/ou en matière plastique munis d'une couche de revêtement ayant les caractéristiques décrites ci-dessus.

**Revendications**

1 - Couche de revêtement transparente pour des vitrages ou autres substrats transparents en verre ou en résine synthétique, consistant en polyuréthanne élastique souple qui est préparé à partir d'un mélange de réaction dont le composant isocyanate consiste en polyisocyanates essentiellement trifonctionnels aliphatiques à structure de biuret ou d'isocyanurate formés à base de 1,6-hexaméthylènediisocyanate,ayant une teneur en radicaux NCO de 15 à 25% en poids et un poids moléculaire moyen d'environ 450 à environ 1000 g par mole, dont le composant polyol contient au moins un polyol plurifonctionnel,et qui contient éventuellement un catalyseur de réaction et d'autres substances auxiliaires, caractérisée en ce que le composant polyol du mélange de réaction consiste en un polyétherpolyol sulfoné difonctionnel ayant une teneur en radicaux OH d'environ 1 à 10% en poids et en un polyol trifonctionnel ayant une teneur en radicaux OH d'environ 8 à 12% en poids et un poids moléculaire moyen d'environ 400 à environ 1000 g par mole.

2 - Couche de revêtement transparente suivant la revendication 1, caractérisée en ce qu'un éther polyoxyalcoylénique de 1,2- ou 1,3-diols de formule

$$R^1CH_2O-(C_2H_4O-)_n(C_3H_6O-)_mCH_2CHR^3CH_2-SO_2X$$

où

$R^1$ = 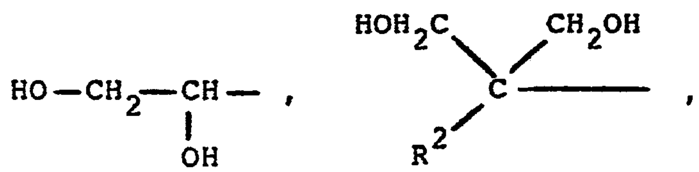

$R^2$ = $CH_3$-, $C_2H_5$-, $C_3H_7$-,

$R^3$ = H- ou $CH_3$-,

X = H-,ion alcalin ou ammonium,

n = 0 à 100,

m = 0 à 30,

$$n + m \geqslant 1$$

est utilisé comme polyétherpolyol sulfoné difonctionnel.

3 - Couche de revêtement transparente suivant les revendications 1 et 2, caractérisée en ce qu'un éther polyoxyalcoylénique sulfoné d'un poids moléculaire moyen d'environ 500 à 5000 g par mole et de préférence d'environ 2000 g par mole est utilisé.

4 - Couche de revêtement transparente suivant les revendications 1 à 3, caractérisée en ce que l'éther polyoxyalcoylénique sulfoné utilisé est formé de radicaux éthoxy et propoxy avec au moins 50% en poids de radicaux éthoxy dans la chaîne.

5 - Couche de revêtement transparente suivant la revendication 4, caractérisée en ce que l'éther polyoxyalcoylénique sulfoné présente un rapport éthoxy-propoxy d'environ 80:20.

6 - Couche de revêtement transparente suivant une ou plusieurs des revendications 1 à 5, caractérisée en ce que la proportion de l'éther polyoxyalcoylénique sulfoné dans le mélange de réaction est de 5 à 15% en poids.

7 - Couche de revêtement transparente suivant une ou plusieurs des revendications 1 à 6, caractérisée en ce qu'un polyétherpolyol à base de triméthylolpropane ou de glycérol et d'oxyde de propylène est utilisé comme polyol trifonctionnel.

8 - Couche de revêtement transparente suivant une ou plusieurs des revendications 1 à 6, caractérisée en ce qu'un lactone polyesterpolyol à base de triméthylolpropane ou de glycérol et d'ε-caprolactone est utilisé comme polyol trifonctionnel.

9 - Couche de revêtement transparente suivant une ou plusieurs des revendications 1 à 8, caractérisée en ce qu'un mélange de réaction présentant un rapport NCO/OH de 0,8 à 1,1 et de préférence d'environ 0,9 est utilise.

10 - Couche de revêtement transparente suivant une ou plusieurs des revendications 1 à 9, caractérisée en ce que le mélange de réaction contient un ou plusieurs composés chimiques tels que des huiles de silicone ou des esters alcoyliques fluorés en une quantité de 0,05 à 0,15% en poids comme agent d'écoulement.

11 - Couche de revêtement transparente suivant une ou plusieurs des revendications 1 à 10, caractérisée en ce que le mélange de réaction contient 0,5 à 2% en poids de sébaçate de bis(1,2,2,6,6-pentaméthyl-4-pipéridyle) comme agent de protection contre la lumière.

12 - Couche de revêtement transparente suivant une ou plusieurs des revendications 1 à 11, caractérisée en ce que le mélange de réaction contient des agents absorbant les rayons ultraviolets tels que des benzotriazoles substitutés, en une quantité de 0,5 à 5% en poids.

13 - Vitrage monolithique ou feuilleté en verre et/ou en matière plastique, caractérisé en ce qu'il est muni d'une couche de revêtement selon une des revendications 1 à 12.

**Patentansprüche**

1. Transparente Deckschicht für Sichtscheiben oder andere transparente Glas- oder Kunststoffsubstrate, aus weichelastischem Polyurethan, das aus einer Reaktionsmischung hergestellt ist, deren Isocyanatkomponente aus im wesentlichen trifunktionellen aliphatischen, auf der Basis von 1,6-Hexamethylendiisocyanat aufgebauten Polyisocyanat mit Biuret- oder Isocyanuratstruktur, mit einem Gehalt an NCO-Gruppen von 15 bis 25 Gew.-% und einem mittleren Molekulargewicht von ca. 450 bis ca. 1000 g/mol besteht, deren Polyolkomponente wenigstens ein mehrfunktionelles Polyol aufweist, und die gegebenenfalls einen Reaktionskatalysator und weitere Hilfsstoffe enthält, dadurch gekennzeichnet, dass die Polyolkomponente der Reaktionsmischung aus einem difunktionellen sulfonierten Polyetherpolyol mit einem Gehalt an OH-Gruppen von ca. 1 bis 10 Gew.-% und einem trifunktionellen Polyol mit einem Gehalt an OH-Gruppen von ca. 8 bis 12 Gew.-% und einem mittleren Molekulargewicht von ca. 400 bis ca. 1000 g/mol besteht.

2. Transparente Deckschicht nach Anspruch 1, dadurch gekennzeichnet, dass als difunktionelles sulfoniertes Polyetherpolyol ein Polyoxyalkylenether von 1,2- oder 1,3-Diolen der Formel

$$R^1CH_2O—(C_2H_4O—)_n(C_3H_6O—)_mCH_2CHR^3CH_2—SO_2X$$

wobei

$R^1$ = 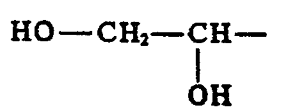 , 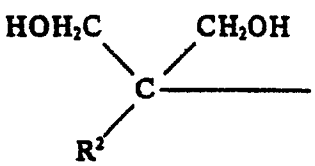 ,

$R^2$ = $CH_3-$, $C_2H_5-$, $C_3H_7-$,
$R^3$ = $H-$ oder $CH_3-$,
$X$ = $H-$, Alkali- oder Ammoniumion,
$n$ = 0 bis 100,
$m$ = 0 bis 30,
$n + m \geq 1$

verwendet wird.

3. Transparente Deckschicht nach Anspruch 1 und 2, dadurch gekennzeichnet, dass ein sulfonierter Polyoxyalkylenether mit einem mittleren Molekulargewicht von ca. 500 bis 5000 g/mol, und vorzugsweise von ca. 2000 g/mol verwendet wird.

4. Transparente Deckschicht nach Anspruch 1 bis 3, dadurch gekennzeichnet, dass der verwendete sulfonierte Polyoxyalkylenether aus Ethoxi- und Propoxi-Gruppen mit wenigstens 50 Gew.-% Ethoxi-Gruppen in der Kette aufgebaut ist.

5. Transparente Deckschicht nach Anspruch 4, dadurch gekennzeichnet, dass der sulfonierte Polyoxyalkylenether ein Ethoxi-Propoxi-Verhältnis von ca. 80:20 aufweist.

6. Transparente Deckschicht nach einem oder mehreren der Ansprüche 1 bis 5, dadurch gekennzeichnet, dass der Anteil des sulfonierten Polyoxyalkylenethers in der Reaktionsmischung 5 bis 15 Gew.-% beträgt.

7. Transparente Deckschicht nach einem oder mehreren der Ansprüche 1 bis 6, dadurch gekennzeichnet, dass als trifunktionelles Polyol ein Polyetherpolyol auf der Basis von Trimethylolpropan oder Glycerin und Propylenoxid verwendet wird.

8. Transparente Deckschicht nach einem oder mehreren der Ansprüche 1 bis 6, dadurch gekennzeichnet, dass als trifunktionelles Polyol ein Lactonpolyesterpolyol auf der Basis von Trimethylolpropan oder Glycerin und ε-Caprolacton verwendet wird.

9. Transparente Deckschicht nach einem oder mehreren der Ansprüche 1 bis 8, dadurch gekennzeichnet, dass eine Reaktionsmischung mit einem NCO/OH-Verhältnis von 0,8 bis 1,1, vorzugsweise von etwa 0,9, verwendet wird.

10. Transparente Deckschicht nach einem oder mehreren der Ansprüche 1 bis 9, dadurch gekennzeichnet, dass die Reaktionsmischung eine oder mehrere chemische Verbindungen wie Silikonöle oder fluorierte Alkylester in einer Menge von 0,05 bis 0,15 Gew.-% als Verlaufsmittel enthält.

11. Transparente Deckschicht nach einem oder mehreren der Ansprüche 1 bis 10, dadurch gekennzeichnet, dass die Reaktionsmischung 0,5 bis 2 Gew.-% Bis (1,2,2,6,6,-pentamethyl-4-piperidyl)sebazat als Lichtschutzmittel enthält.

12. Transparente Deckschicht nach einem oder mehreren der Ansprüche 1 bis 11, dadurch gekennzeichnet, dass die Reaktionsmischung UV-Strahlen absorbierende Mittel wie substituierte Benzotriazole in einer Menge von 0,5 bis 5 Gew.-% enthält.

13. Monolytische Glasscheibe oder Verbundglasscheibe aus Glas und/oder aus Kunststoff, dadurch gekennzeichnet, dass sie mit einer Deckschicht nach einem der Ansprüche 1 bis 12 versehen ist.

**Claims**

1. Transparent covering layer for panes or other transparent substrates of glass or of synthetic resin, consisting of flexible elastic polyurethane, which is prepared from a reaction mixture, the isocyanate component of which consists of aliphatic, essentially trifunctional polyisocyanates having a biuret or isocyanurate structure and formed on a basis of 1,6-hexamethylene diisocyanate, having a content of NCO radicals of 15 to 25% by weight and a mean molecular weight of approximately 450 to approximately 1,000 g per mole, the polyol component of which contains at least one multifunctional polyol, and which possibly contains a reaction catalyst and other auxiliary substances, characterized in that the polyol component of the reaction mixture consists of a difunctional, sulphonated polyether polyol having a content of OH radicals of approximately 1 to 10% by weight and a trifunctional polyol having a content of OH radicals of approximately 8 to 12% by weight and a mean molecular weight of approximately 400 to approximately 1,000 g per mole.

2. Transparent covering layer according to claim 1, characterized in that a polyoxyalkylenic ether of 1,2- or 1,3-diols of the formula

$$R^1CH_2O—(C_2H_4O—)_n(C_3H_6O—)_mCH_2CHR^3CH_2—SO_2X$$

where

$R^1$ = 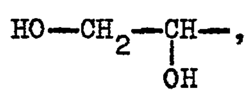, 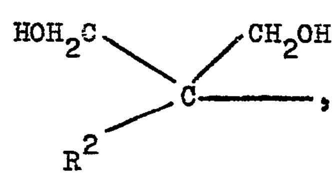

/ $R^2$ =

$R^2$ = $CH_3-$, $C_2H_5-$, $C_3H_7-$,
$R^3$ = H- or $CH_3-$,
X = H-, alcaline ion or ammonium ion,
n = 0 to 100,
m = 0 to 30,
$n + m \geqslant 1$

is used as difunctional, sulphonated polyether polyol.

3. Transparent covering layer according to claims 1 and 2, characterized in that a sulphonated polyoxyalkylenic ether having a mean molecular weight of approximately 500 to 5,000 g per mole and preferably of approximately 2,000 g per mole is used.

4. Transparent covering layer according to claims 1 to 3, characterized in that the sulphonated polyoxyalkylenic ether used is formed of ethoxy and propoxy radicals with at least 50% by weight of ethoxy radicals in the chain.

5. Transparent covering layer according to claim 4, characterized in that the sulphonated polyoxyalkylenic ether has a ratio of ethoxy-propoxy of approximately 80:20.

6. Transparent covering layer according to one or more of claims 1 to 5, characterized in that the proportion of sulphonated polyoxyalkylenic ether in the reaction mixture is from 5 to 15% by weight.

7. Transparent covering layer according to one or more of claims 1 to 6, characterized in that a polyether polyol based upon trimethylol propane or upon glycerol and propylene oxide is used as trifunctional polyol.

8. Transparent covering layer according to one or more of claims 1 to 6, characterized in that a polyester polyol lactone on a basis of trimethylol propane or/and of glycerol and ε-caprolactone is used as trifunctional polyol.

9. Transparent covering layer according to one or more of claims 1 to 8, characterized in that a reaction mixture having a ratio NCO/OH of 0.8 to 1.1 and preferably of approximately 0.9 is used.

10. Transparent covering layer according to one or more of claims 1 to 9, characterized in that the reaction mixture contains one or more chemical compounds such as silicone oils or fluorinated alkylic esters in a proportion of 0.05 to 0.15% by weight as flow agent.

11. Transparent covering layer according to one or more of claims 1 to 10, characterized in that the reaction mixture contains 0.5 to 2% by weight of bis(1,2,2,6,6-pentamethyl-4-piperidyl) sebacate as agent for protection against light.

12. Transparent covering layer according to one or more of claims 1 to 11, characterized in that the reaction mixture contains agents that absorb ultraviolet radiation, such as substituted benzotriazoles, in a proportion of 0.5 to 5% by weight.

13. Monolithic or laminated pane of glas and/or of plastics material, characterized in that it is provided with a covering layer according to one of claims 1 to 12.